# EUROPEAN PATENT APPLICATION

(11) **EP 4 803 968 A1**
(43) Date of publication of application: **09.09.2026**
(21) Application number: 24884991.1
(22) Date of filing: 01.11.2024
(51) Int. Cl.: G05D 1/485

(54) **POOL CLEANING SYSTEM**

(30) Priority: 02.11.2023 CN 202311451133; 02.11.2023 CN 202322969179 U; 03.04.2024 CN 202410402061
(71) Applicant: Wybotics Co., Ltd, Tianjin 300462 (CN)
(72) Inventor: LI, Xiaotian, Tianjin 300462 (CN); LI, Cheng, Tianjin 300462 (CN); TONG, Xinming, Tianjin 300462 (CN); YU, Qian, Tianjin 300462 (CN)
(74) Representative: Casalonga
(86) International application number: PCT/CN2024/129441
(87) International publication number: WO 2025/092994

(57) **Abstract**

A pool cleaning system (1) comprising a base station (200) and a pool cleaning robot (100) is provided. The pool cleaning robot (100) and/or the base station (200) is provided with a locking mechanism (221). The pool cleaning robot (100) comprises at least one motor, a power supply module, and a filtering unit (130), and the base station (200) is located on a wall (3) of a pool at a position corresponding to a waterline of the pool; the pool cleaning robot (100) is configured to move toward the base station (200) when a return condition is satisfied. The pool cleaning robot (100) is further configured to climb up the wall and dock with the base station (200) when reaching the vicinity of the base station (200). The base station (200) is configured to control the locking mechanism (221) to fix the pool cleaning robot (100) when the pool cleaning robot (100) has been docked with the base station (200).

## Description

The present application claims priority to Chinese Patent Application No. 2023114511336 titled "CONTROL SYSTEM FOR POOL CLEANING ROBOT" and filed on November 2, 2023, to Chinese Patent Application No. 2023229691799 titled "POOL CLEANING ROBOT SYSTEM" and filed on November 2, 2023, and to Chinese Patent Application No. 2024104020614 titled "POOL CLEANING SYSTEM" and filed on April 3, 2024, the entire contents of which are incorporated herein by reference.

### TECHNICAL FIELD

The present application relates to the technical field of robots, and particularly, to a pool cleaning system.

### BACKGROUND

With the development of computer technologies, robot technologies have also rapidly developed. For example, users use floor cleaning robots to clean floors, use window cleaning robots to clean windows, and use pool cleaning robots to clean pools, etc.

In related technologies, when the pool cleaning robots are used to clean the pools, the pool cleaning robots continue to operate until their power runs out. After the power of the pool cleaning robots runs out, the pool cleaning robots stop at the bottoms of the pools, requiring operators to retrieve the pool cleaning robots from the pools using tools.

### SUMMARY

Embodiments of the present application provide a pool cleaning system, and the technical solutions are described as follows.

The pool cleaning system provided includes a pool cleaning robot and a base station.

The pool cleaning robot is capable of moving toward the base station and then docking with the base station.

In some embodiments, the pool cleaning robot and/or the base station is provided with a locking mechanism, the pool cleaning robot includes at least one motor, a power supply module, and a filtering unit, and the base station is positioned on a pool wall at a position corresponding to a waterline of a pool.

The pool cleaning robot is configured to move toward the base station when a return condition is satisfied.

The pool cleaning robot is further configured to climb up the wall upon reaching a vicinity of the base station and then move on the pool wall to dock with the base station.

The base station is configured to control the locking mechanism to fix the pool cleaning robot, when the pool cleaning robot has been docked with the base station.

In some embodiments, the base station includes an above-water communication unit configured to communicate with an above-water device.

The base station further includes at least one underwater communication unit configured to guide the pool cleaning robot to move toward the base station and communicate with an underwater device, and the underwater communication unit is electrically connected to the above-water communication unit.

In some embodiments, the underwater device is the pool cleaning robot, and the underwater communication unit is configured to transmit an ultrasonic signal. The pool cleaning robot is configured to receive, when the return condition is satisfied, the ultrasonic signal transmitted by the base station via at least two ultrasonic receiving subunits of the pool cleaning robot, wherein the at least two ultrasonic receiving subunits are positioned at different positions of the pool cleaning robot. Based on a signal parameter of the ultrasonic signal received by each of the at least two ultrasonic receiving subunits, the pool cleaning robot is controlled to move toward the base station until the pool cleaning robot has been docked with the base station.

In some embodiments, the underwater device is the pool cleaning robot, and the underwater communication unit is configured to transmit a wireless signal. The pool cleaning robot is configured to receive, when the return condition is satisfied, the wireless signal transmitted by the base station via at least two wireless receiving subunits of the pool cleaning robot, wherein the at least two wireless receiving subunits are positioned at different positions of the pool cleaning robot. Based on a signal parameter of the wireless signal received by each of the at least two wireless receiving subunits, the pool cleaning robot is controlled to move toward the base station until the pool cleaning robot has been docked with the base station.

In some embodiments, the underwater device is the pool cleaning robot, and the underwater communication unit is configured to emit light of a preset wavelength. The pool cleaning robot is configured to acquire, when the return condition is satisfied, an environment image of the pool cleaning robot via an image acquisition unit of the pool cleaning robot. Based on pixels for the preset wavelength in the environment image, the pool cleaning robot is controlled to move toward the base station.

In some embodiments, the base station includes a docking station for the pool cleaning robot, and the at least one underwater communication unit is arranged on a central axis of the docking station and/or symmetrically on both left and right sides of the central axis of the base station.

In some embodiments, the above-water communication unit is configured to send, in response to a control instruction sent by a target terminal, the control instruction to the underwater communication unit, such that the underwater communication unit forwards the control instruction to the pool cleaning robot, wherein the target terminal is a terminal having control authority over the pool cleaning robot.

The underwater communication unit is further configured to send, in response to feedback information sent by the pool cleaning robot, the feedback information to the above-water communication unit, such that the above-water communication unit forwards the feedback information to the target terminal.

In some embodiments, the base station further includes a wireless charging transmitter coil, and the pool cleaning robot further includes a wireless charging receiver coil. When the pool cleaning robot has been docked with the base station, the wireless charging transmitter coil is positioned adjacent to the wireless charging receiver coil. The base station is further configured to charge, when the locking mechanism fixes the pool cleaning robot, the pool cleaning robot via the wireless charging transmitter coil and the wireless charging receiver coil.

In some embodiments, the base station includes a docking station for the pool cleaning robot, and the wireless charging transmitter coil is positioned on a central axis of the docking station.

In some embodiments, the base station further includes a solar power generation panel configured to supply power to the base station and/or the wireless charging transmitter coil.

In some embodiments, the base station further includes a battery, the solar power generation panel is electrically connected to the battery, and the battery is configured to supply power to the base station and the wireless charging transmitter coil.

In some embodiments, the locking mechanism may be unlocked by the pool cleaning robot and/or the base station, such that the pool cleaning robot can be detached from the base station.

In some embodiments, the base station further includes a garbage collection unit configured to extract garbage from the filtering unit.

In some embodiments, the base station further includes a pump system, the garbage collection unit is docked with an opening of the filtering unit, and the base station is further configured to control the pump system to pump the garbage from the opening into the garbage collection unit.

In some embodiments, the locking mechanism and the pool cleaning robot each include a permanent magnet and/or a metal block, such that when the pool cleaning robot has been docked with the base station, the permanent magnet and/or the metal block of the locking mechanism establishes a magnetic connection with the permanent magnet and/or the metal block of the pool cleaning robot to fix the pool cleaning robot.

Alternatively, the locking mechanism includes an electromagnet, and the pool cleaning robot includes a permanent magnet and/or a metal block. When the pool cleaning robot has been docked with the base station, the electromagnet is positioned adjacent to the permanent magnet and/or the metal block. The base station is configured to energize the electromagnet when the pool cleaning robot has been docked with the base station, such that the electromagnet applies a magnetic force to the permanent magnet and/or the metal block to fix the pool cleaning robot.

Alternatively, the locking mechanism includes a hook, and the pool cleaning robot includes a protrusion or a groove fitted to the hook. The base station is configured to connect the hook of the locking mechanism to the protrusion or the groove to fix the pool cleaning robot when the pool cleaning robot has been docked with the base station.

In some embodiments, the return condition includes: whether remaining power of the pool cleaning robot is less than or equal to a power threshold, whether the filtering unit of the pool cleaning robot is filled with garbage, whether the pool cleaning robot has completed a predetermined cleaning task, and whether the pool cleaning robot has received a return instruction.

In some embodiments, the base station and/or the pool cleaning robot further includes a docking detection unit, the base station and/or the pool cleaning robot further includes a docking unit. The docking detection unit is configured to determine whether the pool cleaning robot has been docked with the base station, based on a relative positional relationship between the docking detection unit and the docking unit.

In some embodiments, the pool cleaning robot is provided with a walking unit, wherein the walking unit is rotatable relative to the pool cleaning robot and is configured to come into contact with the bottom wall and a side wall of the pool. The pool cleaning robot and the base station are switchable between a disconnected state and a connected state. When the pool cleaning robot and the base station are in the disconnected state, the pool cleaning robot is capable of automatically moving toward the base station.

A lateral detection unit is provided on the pool cleaning robot and is configured to detect a distance between the pool cleaning robot and an obstacle positioned at a side of the pool cleaning robot.

In some embodiments, the base station is provided with a first signal unit, the pool cleaning robot is provided with a second signal unit, and the first signal unit and the second signal unit are configured to wirelessly communicate with each other.

In some embodiments, the base station is provided with a base station energy storage unit and a first charging unit, wherein the base station energy storage unit is connected to the first charging unit. The pool cleaning robot is provided with a robot energy storage unit and a second charging unit, wherein the robot energy storage unit is connected to the second charging unit, and the first charging unit is cooperative with the second charging unit.

In some embodiments, the base station is provided with an electrical connection unit and a first charging unit, wherein the electrical connection unit is connected to the first charging unit and is adapted to connect to an external power supply. The pool cleaning robot is provided with a robot energy storage unit and a second charging unit, wherein the robot energy storage unit is connected to the second charging unit, and the first charging unit is cooperative with the second charging unit.

In some embodiments, an angle between an extension direction of the lateral detection unit and a forward direction of the pool cleaning robot is greater than 0° and is not greater than 90°.

In some embodiments, the lateral detection unit includes at least one of an optical distance sensor, a camera, an ultrasonic distance sensor, a mechanical switch, and a pressure sensor.

In some embodiments, the lateral detection unit is arranged on at least one of side surfaces, a top surface, a bottom surface, and a forward surface of the pool cleaning robot.

In some embodiments, the pool cleaning robot is provided with a timing unit. in a case where the pool cleaning robot is moving toward the base station, when a cumulative time of the timing unit exceeds a preset time, the forward surface of the pool cleaning robot rotates in a direction away from the obstacle, to change the forward direction of the pool cleaning robot.

In some embodiments, the pool cleaning robot is provided with a mileage detection unit and a posture detection unit, wherein the mileage detection unit is configured to record a movement distance of the pool cleaning robot, and the posture detection unit is configured to detect a posture of the pool cleaning robot.

In some embodiments, the base station is provided with a first display panel, wherein the first display panel is configured to display a contour pattern of the pool and a position of the base station in the pool, according to the mileage detection unit and the posture detection unit; and/or
the pool cleaning system further includes an electronic terminal having a second display panel, wherein the second display panel is configured to display the contour pattern of the pool and the position of the base station in the pool, according to the mileage detection unit and the posture detection unit.

In some embodiments, the base station is vertically arranged with its bottom surface in contact with the pool wall of the pool, and the system further includes:

a control unit positioned on an upper part of the base station and at least partially exposed above a water surface of the pool; wherein the control unit includes a box body, and a power supply, a control unit and a wireless communication unit positioned in the box body; the control unit is electrically connected to the wireless communication unit and the power supply, and the control unit is configured to communicate with the pool cleaning robot via the wireless communication unit to guide the pool cleaning robot to return to the base station;

a locking mechanism arranged on the base station, wherein the locking mechanism is configured to fix the pool cleaning robot when the pool cleaning robot returns to the base station.

In some embodiments, the system further includes a fixing unit fixedly connected to the base station and/or the control unit, wherein the fixing unit is configured to mount the base station and/or the control unit on the pool wall of the pool.

In some embodiments, the control unit is fixedly arranged on a bank of the pool and is connected to the base station via a cable.

In some embodiments, the fixing unit utilizes a connector coated with glue on a surface thereof; and/or
the fixing unit utilizes a suction cup.

In some embodiments, the locking mechanism includes:
a positioning unit electrically connected to the power supply and the control unit, wherein the positioning unit is configured to detect whether the pool cleaning robot has returned to the base station;
a locking actuator electrically connected to the power supply and the control unit, wherein the locking actuator is configured to fix the pool cleaning robot when the positioning unit detects that the pool cleaning robot has returned to the base station.

In some embodiments, the positioning unit utilizes a position switch, an infrared positioning sensor, or a laser positioning sensor.

In some embodiments, the locking actuator includes:
an electromagnetic actuator comprising an electromagnet, wherein when the positioning unit detects that the pool cleaning robot has returned to the base station, the electromagnet is energized to attract a metal piece on the bottom of the pool cleaning robot; and/or
a mechanical actuator comprising a power source, a transmission mechanism, and a clamping claw; wherein the power source is in transmission connection with the clamping claw via the transmission mechanism; and when the positioning unit detects that the pool cleaning robot has returned to the base station, the power source is activated to drive the clamping claw to clamp the pool cleaning robot.

In some embodiments, the system further includes:
a wireless charging transmitter coil arranged at the base station and electrically connected to the power supply and the control unit, wherein the wireless charging transmitter coil is configured to charge an internal battery of the pool cleaning robot via a charging receiver coil of the pool cleaning robot when the pool cleaning robot returns to the base station.

In some embodiments, the system further includes:
a guide apparatus comprising two guide positioning plates, wherein the two guide positioning plates are arranged in parallel and spaced apart on a side of a support plane away from the pool wall of the pool, and the guide apparatus is configured to guide the pool cleaning robot to return to the base station.

In some embodiments, the two guide positioning plates each have an extension portion at one end on the same side; a distance between the two extension portions gradually increases along a direction away from the other ends of the guide positioning plates.

The base station has an arc-shaped transition portion at one end proximal to the extension portion to guide the pool cleaning robot to smoothly return to the base station from the pool wall of the pool.

### BRIEF DESCRIPTION OF THE DRAWINGS

To describe the technical solutions of the embodiments of the present application more clearly, the accompanying drawings required for describing the embodiments will be briefly introduced below. Apparently, the accompanying drawings in the following description are merely some embodiments of the present application. To those of ordinary skills in the art, other accompanying drawings may also be derived from these accompanying drawings without creative efforts.
FIG. 1 is a schematic structural diagram of a pool cleaning system according to an embodiment of the present application;
FIG. 2 is a schematic structural diagram of a base station according to an embodiment of the present application;
FIG. 3 is a schematic diagram of a pool cleaning robot in a pool according to an embodiment of the present application;
FIG. 4 is a schematic diagram of another pool cleaning robot in a pool according to an embodiment of the present application;
FIG. 5 is a schematic structural diagram of a pool cleaning robot according to an embodiment of the present application;
FIG. 6 is a schematic structural diagram of another pool cleaning robot according to an embodiment of the present application;
FIG. 7 is a schematic structural diagram of still another pool cleaning robot according to an embodiment of the present application;
FIG. 8 is a schematic structural diagram of yet another pool cleaning system according to an embodiment of the present application;
FIG. 9 is a schematic structural diagram of a base station according to an embodiment of the present application; and
FIG. 10 is a schematic diagram of a pool cleaning robot returning to a base station on a pool wall of a pool according to an embodiment of the present application.

Reference numerals in the accompanying drawings:
pool cleaning system 1; pool 2;
pool cleaning robot 100; walking unit 110; front detection unit 120; filtering unit 130; robot energy storage unit 140; second charging unit 150; second signal unit 160; timing unit 170;
base station 200; above-water portion 210; above-water communication unit 211; solar power generation panel 212; battery 213; underwater portion 220; locking mechanism 221; underwater communication unit 222; base station energy storage unit 230; first charging unit 240; first signal unit 250; control unit 260; locking apparatus 270; arc-shaped transition portion 280; detection unit 300; mileage detection unit 400; posture detection unit 500; guide apparatus 600; guide positioning plate 610; extension portion 620; and pool wall 3.

### DETAILED DESCRIPTION

Detailed description of the embodiments of the present application will further be made with reference to the accompanying drawings to make the objectives, technical solutions and advantages of the present application more apparent.

Terms such as "first" and "second" in the present application are used to distinguish between the same or similar items whose roles and functions are basically the same. It should be understood that there is no logical or temporal dependency between "first", "second", and "nth", nor is there a limitation on quantity and execution order.

Pool cleaning robot: a robot used to perform underwater cleaning tasks. For example, when placed in a pool, the pool cleaning robot can clean the bottom of the pool. In some embodiments, the pool cleaning robot also has a wall-climbing function, enabling it to clean a pool wall of the pool.

Computer Vision: computer vision is a science that studies how to enable machines to "see." More specifically, it refers to using image acquisition devices and computers to replace the human eye in performing tasks such as object recognition, tracking, and measurement. It further processes images to make them more suitable for human observation or transmission to instruments for detection. As a scientific discipline, the computer vision studies related theories and technologies, attempting to build artificial intelligence systems that can extract "information" from images or multidimensional data.

Ultrasound wave: ultrasound wave is a mechanical wave with an extremely short wavelength, typically less than 2 cm in air. It relies on a medium to propagate and cannot exist in a vacuum (such as space). It travels farther in water than in air. In some scenarios, the ultrasound wave can propagate hundreds of meters in water.

Radio Frequency (RF): RF refers to the electromagnetic frequency of an electromagnetic wave that can be radiated into space, ranging from 300 kHz to 300 GHz. Radio frequency (RF) refers to radio frequency current, which is high-frequency alternating current that varies to generate the electromagnetic wave. The alternating current (AC) with a change of less than 1,000 times per second is called low-frequency current, and the AC with a change of greater than 1,000 times per second is called high-frequency current, and the RF is such a high-frequency current. RF (300K-300G) is a higher frequency band of high frequency (greater than 10K), and a microwave frequency band (300M-300G) is a higher frequency band of the RF. Compared with the ultrasound wave, a propagation distance of an RF signal in water is very small. In some scenarios, the propagation distance of the RF signal in the water is only two meters.

Embodiments of the present application provide a pool cleaning system, which includes a pool cleaning robot and a base station. The pool cleaning robot is capable of moving toward the base station and then docking with the base station.

The above technical solutions are described below through several embodiments.

### Embodiment 1

In related technologies, because the pool cleaning robot does not stop at a fixed position on the bottom of the water, it takes a lot of time to search for the pool cleaning robot, so the pool cleaning robot has lower retrieval efficiency. To solve the above problems, the following technical solutions are provided.

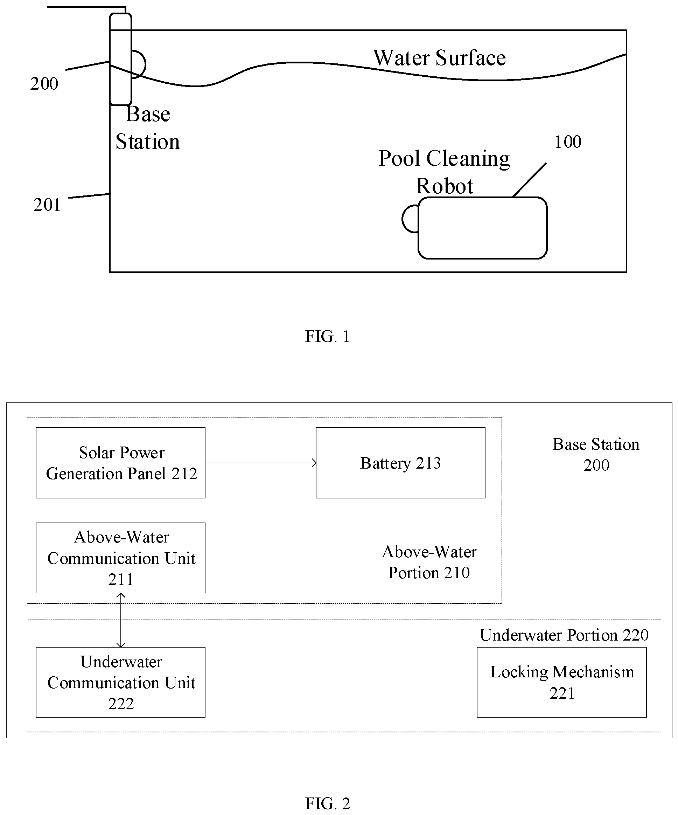

Referring to FIG. 1, the pool cleaning system provided in an embodiment of the present application includes a pool cleaning robot 100 and a base station 200. The pool cleaning robot 100 and/or the base station 200 is provided with a locking mechanism. The pool cleaning robot 100 includes at least one motor, a power supply module, and a filtering unit. The base station 200 is positioned on a pool wall 201 at a position corresponding to a waterline.

The pool cleaning robot 100 is configured to move toward the base station 200 when a return condition is satisfied. The pool cleaning robot 100 is further configured to climb up the wall upon reaching a vicinity of the base station 200, and then move on the pool wall to dock with the base station 200. The base station 200 is configured to control the locking mechanism to fix the pool cleaning robot 100 when the pool cleaning robot 100 has been docked with the base station 200.

The pool cleaning robot 100 includes a robot controller which is built in the pool cleaning robot 100 and is configured to control the pool cleaning robot 100. The pool cleaning robot 100 is configured to clean the bottom (and/or the pool wall) of the pool. The motor of the pool cleaning robot 100 is configured to drive the pool cleaning robot 100. The number of the motors may be one or more, which is not specifically limited in the embodiments of the present application. The power supply module is configured to supply power to the pool cleaning robot 100, and the filtering unit is configured to collect garbage in the pool.

When the pool cleaning robot 100 is positioned on the bottom of the pool, the pool cleaning robot 100 can be driven by the motor to move on the bottom of the pool and perform cleaning actions. Accordingly, the pool cleaning robot 100 can move or rotate on the bottom of the pool. A walking unit is provided at the bottom of the pool cleaning robot 100. By driving the walking unit, the pool cleaning robot 100 can be controlled to move on the bottom of the pool. The walking unit includes a walking wheel, and the walking unit is driven (i.e., the walking wheel is driven to rotate) to drive the pool cleaning robot 100 to move. When the pool cleaning robot 100 is positioned on the pool wall of the pool, the pool cleaning robot 100 can move on the pool wall of the pool and perform the cleaning actions. Accordingly, the pool cleaning robot 100 can move or rotate on the pool wall of the pool. A wall climbing unit is provided at the bottom of the pool cleaning robot 100. By driving the wall climbing unit, the pool cleaning robot 100 can be controlled to move on the pool wall of the pool.

In addition, the return condition refers to a condition under which the pool cleaning robot 100 returns to the base station 200. When the return condition is satisfied, the pool cleaning robot 100 can automatically start returning to the base station 200. In some embodiments, the return condition include: whether the remaining power of the pool cleaning robot 100 is less than or equal to a power threshold, whether the filtering unit of the pool cleaning robot 100 is filled with garbage, whether the pool cleaning robot 100 has completed a predetermined cleaning task, and whether the pool cleaning robot 100 has received a return instruction. Accordingly, the pool cleaning robot 100 satisfies the return condition, which means that the remaining power of the pool cleaning robot 100 is less than or equal to the power threshold, the filtering unit of the pool cleaning robot 100 is filled with the garbage, and the pool cleaning robot 100 has received the return instruction. The predetermined cleaning task is set by technical personnel according to actual conditions, which is not limited in the embodiments of the present application.

Also, the direction toward the position of the base station 200 is a direction based on the pool cleaning robot 100, which can reflect a relative positional relationship between the base station 200 and the pool cleaning robot 100. Because the base station 200 is positioned on the pool wall at a position corresponding to the waterline of the pool, the pool cleaning robot 100 reaching a position below the base station 200 means that the pool cleaning robot 100 has moved to the pool bottom below the base station 200. Because the base station 200 is positioned on the pool wall of the pool and the pool cleaning robot 100 has the ability to climb the wall, when the pool cleaning robot 100 reaches the vicinity of the base station 200 (for example, reaching a position below the base station 200), the pool cleaning robot 100 can climb up the wall to dock with the base station 200. The pool cleaning robot 100 has been docked with the base station 200, which means that the pool cleaning robot 100 is successfully connected to the base station 200, such that the base station 200 can provide corresponding services for the pool cleaning robot 100. For example, when the pool cleaning robot 100 has been docked with the base station 200, the base station 200 can provide charging services and dust collection services for the pool cleaning robot 100.

In some embodiments, referring to FIG. 2, the base station 200 includes an above-water portion 210 and an underwater portion 220, wherein the above-water portion 210 is above the waterline, and the underwater portion 220 is below the waterline. The above-water portion 210 includes an above-water communication unit 211 configured to communicate with an above-water device. The underwater portion 220 includes the locking mechanism 221 and an underwater communication unit 222, wherein the underwater communication unit 222 is configured to guide the pool cleaning robot 100 to move toward the base station 200, and the underwater communication unit 222 is configured to communicate with an underwater device, and the underwater communication unit 222 is electrically connected to the above-water communication unit 211.

The base station 200 is positioned on the pool wall of the pool, and the above-water portion 210 and the underwater portion 220 are divided by the waterline of the pool. Of course, a dividing line between the above-water portion 210 and the underwater portion 220 is wider, which helps maintenance personnel to place the base station 200 according to actual conditions. The above-water communication unit 211 is configured to communicate with the above-water device, which refers to an electronic device that is not positioned in the water. When the base station 200 communicates with the above-water device, the propagation medium for electromagnetic waves is air. After the pool cleaning robot 100 is retrieved to the pool bank, it is a kind of above-water device. The underwater device refers to an electronic device positioned in water. When the base station 200 communicates with the underwater device, the propagation medium for electromagnetic waves is water. The pool cleaning robot is a kind of underwater device when it performs the cleaning tasks on the bottom of the pool. The locking mechanism 221 is configured to fix the pool cleaning robot 100, that is, the pool cleaning robot 100 can remain on the pool wall after it stops climbing the wall. The underwater communication unit 222 is configured to guide the pool cleaning robot 100 to move toward the base station 200, that is, to guide the pool cleaning robot 100 to return to the base station 200. The underwater communication unit 222 is electrically connected to the above-water communication unit 211, which means that data exchange can be implemented between the underwater communication unit 222 and the above-water communication unit 211. In some embodiments, the underwater communication unit 222 is connected to the above-water communication unit 211 via a data line to ensure stability of the data exchange. In some embodiments, the base station 200 includes a docking station for the pool cleaning robot 100, and the at least one underwater communication unit 222 is arranged on a central axis of the docking station of the base station 200 and/or symmetrically on both left and right sides of the central axis of the docking station of the base station 200.

Different components of the base station 200 will be described later.

To further clarify the above embodiments, embodiments in which how the underwater communication unit 222 is used to guide the pool cleaning robot 100 to move toward the base station 200 will be described below.

In some embodiments, the underwater device is the pool cleaning robot 100, and the underwater communication unit 222 is configured to transmit an ultrasonic signal. The pool cleaning robot 100 is configured to receive, when the return condition is satisfied, the ultrasonic signal transmitted by the base station 200 via at least two ultrasonic receiving subunits of the pool cleaning robot 100, wherein the at least two ultrasonic receiving subunits are positioned at different positions of the pool cleaning robot 100. Based on a signal parameter of the ultrasonic signal received by each of the at least two ultrasonic receiving subunits, the pool cleaning robot 100 is controlled to move toward the base station 200 until the pool cleaning robot 100 has been docked with the base station 200.

The underwater communication unit 222 transmits the ultrasonic signal to guide the pool cleaning robot 100 to dock with the base station 200. In some embodiments, the underwater communication unit 222 includes at least two ultrasonic transmission subunits for transmitting ultrasonic signals of different frequencies. The at least two ultrasonic receiving subunits of the pool cleaning robot 100 are configured to receive the ultrasonic signals sent by the base station 200. The at least two ultrasonic receiving subunits are positioned at different positions of the pool cleaning robot 100, such that the robot controller uses the ultrasonic signals received by the at least two ultrasonic receiving subunits to realize positioning of the pool cleaning robot 100, and the positioning here refers to determining the relative positional relationship between the pool cleaning robot 100 and the base station 200. In some embodiments, the base station 200 transmits the ultrasonic signal periodically. The ultrasonic signal is also an ultrasonic wave. The signal parameter of the ultrasonic signal is used to represent a reception parameter corresponding to the ultrasonic signal when each ultrasonic receiving subunit receives the ultrasonic signal. The signal parameter of the ultrasonic signal received by each of the at least two ultrasonic receiving subunits refers to the signal parameter of the ultrasonic signal when it is received by each of the at least two ultrasonic receiving subunits. That is, when the number of the at least two ultrasonic receiving subunits is two, the number of the signal parameters is also two. In some embodiments, the signal parameter includes time when each ultrasonic receiving subunit receives the ultrasonic signal and the signal intensity of the ultrasonic signal when each ultrasonic receiving subunit receives the ultrasonic signal. Because the ultrasonic signal propagates a longer distance underwater, transmitting the ultrasonic signal by the base station 200 enables to remotely guide the pool cleaning robot 100 to return to the base station 200. Controlling the pool cleaning robot 100 to move toward the base station 200 is essentially controlling the pool cleaning robot 100 to approach the base station 200.

In some embodiments, the pool cleaning robot 100 is configured to activate the at least two ultrasonic receiving subunits when the return condition is satisfied, and receive the ultrasonic signal transmitted by the underwater communication unit 222 via the at least two ultrasonic receiving subunits. Based on the signal parameter of the ultrasonic signal received by each of the at least two ultrasonic receiving subunits, a target movement direction of the pool cleaning robot 100 is determined, wherein the target movement direction is a direction toward the position of the base station 200. The pool cleaning robot 100 moves in the target movement direction.

The signal parameter includes at least one of the signal reception time and the signal intensity. Because the base station 200 transmits the ultrasonic signal periodically, the at least two ultrasonic receiving subunits each have a signal reception time during each ultrasonic signal transmitting period of the base station 200. The signal intensity can reflect a distance between the pool cleaning robot 100 and the base station 200. The stronger the signal intensity, the shorter the distance between the pool cleaning robot 100 and the base station 200; whereas the weaker the signal intensity, the longer the distance between the pool cleaning robot 100 and the base station 200. The pool cleaning robot 100 is further configured to determine the target movement direction of the pool cleaning robot 100 based on a time difference or a signal intensity difference in receiving the ultrasonic signal by the at least two ultrasonic receiving subunits.

In addition to transmitting the ultrasonic signal, the underwater communication unit 222 can also be configured to transmit a wireless signal. This embodiment is described below.

In some embodiments, the underwater device is the pool cleaning robot 100, and the underwater communication unit 222 is configured to transmit the wireless signal. The pool cleaning robot 100 is configured to receive, when the return condition is satisfied, the wireless signal transmitted by the base station 200 via at least two wireless receiving units of the pool cleaning robot 100, wherein the at least two wireless receiving units are positioned at different positions of the pool cleaning robot 100. Based on a signal parameter of the wireless signal received by each of the at least two wireless receiving units, the pool cleaning robot 100 is controlled to move toward the base station 200 until the pool cleaning robot 100 has been docked with the base station 200.

The underwater communication unit 222 transmits the wireless signal to guide the pool cleaning robot 100 to dock with the base station 200. In some embodiments, the underwater communication unit 222 includes at least two wireless transmission subunits for transmitting wireless signals of different frequencies. The at least two wireless receiving subunits of the pool cleaning robot 100 are configured to receive the wireless signals sent by the base station 200. The at least two wireless receiving subunits are positioned at different positions of the pool cleaning robot 100, such that the robot controller uses the wireless signals received by the at least two wireless receiving subunits to realize positioning of the pool cleaning robot 100, and the positioning here refers to determining the relative positional relationship between the pool cleaning robot 100 and the base station 200. In some embodiments, the base station 200 transmits the wireless signal periodically. The wireless signal is a radio wave, and the signal parameter of the wireless signal is used to represent a reception parameter corresponding to the wireless signal when each wireless receiving subunit receives the wireless signal. The signal parameter of the wireless signal received by each of the at least two wireless receiving subunits refers to the signal parameter of the wireless signal when it is received by each of the at least two wireless receiving subunits. That is, when the number of the at least two wireless receiving subunits is two, the number of the signal parameters is also two. In some embodiments, the signal parameter includes time when each wireless receiving subunit receives the wireless signal and the signal intensity of the wireless signal when each wireless receiving subunit receives the wireless signal. Because the wireless signal propagates a longer distance underwater, transmitting the wireless signal by the base station 200 enables to remotely guide the pool cleaning robot 100 to return to the base station 200. Controlling the pool cleaning robot 100 to move toward the base station 200 is essentially controlling the pool cleaning robot 100 to approach the base station 200.

In some embodiments, the pool cleaning robot 100 is configured to activate the at least two wireless receiving subunits when the return condition is satisfied, and receive the wireless signal transmitted by the underwater communication unit 222 via the at least two wireless receiving subunits. Based on the signal parameter of the wireless signal received by each of the at least two wireless receiving subunits, a target movement direction of the pool cleaning robot 100 is determined, wherein the target movement direction is the direction toward the base station 200. The pool cleaning robot 100 moves in the target movement direction.

The signal parameter includes at least one of the signal reception time and the signal intensity. Because the base station 200 transmits the wireless signal periodically, the at least two wireless receiving subunits each have a signal reception time during each wireless signal transmitting period of the base station 200. The signal intensity can reflect the distance between the pool cleaning robot 100 and the base station 200. The stronger the signal intensity, the shorter the distance between the pool cleaning robot 100 and the base station 200; whereas the weaker the signal intensity, the longer the distance between the pool cleaning robot 100 and the base station 200. The pool cleaning robot 100 is further configured to determine the target movement direction of the pool cleaning robot 100 based on a time difference or a signal intensity difference in receiving the wireless signal by the at least two wireless receiving subunits.

In addition to transmitting the ultrasonic signal and the wireless signal, the underwater communication unit 222 can also be configured to emit light of a preset wavelength, that is, to guide the pool cleaning robot 100 to dock with the base station 200 through the light of the preset wavelength. This embodiment is described below.

In some embodiments, the underwater device is the pool cleaning robot 100, and the underwater communication unit 222 is configured to emit the light of the preset wavelength. The pool cleaning robot 100 is configured to acquire, when the return condition is satisfied, an environment image of the pool cleaning robot 100 via an image acquisition unit of the pool cleaning robot 100. Based on pixels of a preset color corresponding to the preset wavelength in the environment image, the pool cleaning robot 100 is controlled to move toward the base station 200.

The preset wavelength is experimentally obtained, and the light of the preset wavelength is a wavelength that produces better underwater imaging effects.

Functions of the above-water communication unit 211 and the underwater communication unit 222 are described below.

In some embodiments, the above-water communication unit 211 is configured to send, in response to a control instruction sent by a target terminal, the control instruction to the underwater communication unit 222, such that the underwater communication unit 222 forwards the control instruction to the pool cleaning robot 100, wherein the target terminal is a terminal having control authority over the pool cleaning robot 100. The underwater communication unit 222 is further configured to send, in response to feedback information sent by the pool cleaning robot 100, the feedback information to the above-water communication unit 211, such that the above-water communication unit 211 forwards the feedback information to the target terminal.

The target terminal is also referred to as a control terminal for the pool cleaning robot 100. The target terminal is a type of above-water device.

When the control instruction is a floating-up instruction, the above-water communication unit 211 is configured to transmit, in response to the floating-up instruction sent by the target terminal, the floating-up instruction to the underwater communication unit 222, such that the underwater communication unit 222 forwards the floating-up instruction to the pool cleaning robot 100, causing the pool cleaning robot 100 to float up.

In this embodiment, communication between the target terminal and the pool cleaning robot 100 can be achieved more efficiently using the above-water communication unit 211 and the underwater communication unit 222.

The locking mechanism 221 of the base station 200 is introduced below.

In some embodiments, the locking mechanism 221 includes a permanent magnet, and the pool cleaning robot 100 includes a permanent magnet and/or a metal block. The base station 200 is configured to establish, when the pool cleaning robot 100 has been docked with the base station 200, a magnetic connection between the permanent magnet of the locking mechanism 221 and the permanent magnet and/or the metal block of the pool cleaning robot 100 to fix the pool cleaning robot 100.

Driven by the drive mechanism of the base station 200, the permanent magnet can move, such that when the pool cleaning robot 100 needs to be fixed, the permanent magnet is driven to move to a corresponding position which refers to the vicinity of the permanent magnet and/or the metal block of the pool cleaning robot 100. When the permanent magnet moves adjacent to the permanent magnet and/or the metal block of the pool cleaning robot 100, the pool cleaning robot 100 can still stay on the pool wall and keep in docking with the base station 200 even though the wall climbing function of the pool cleaning robot 100 is disenabled. Of course, when the permanent magnet has not yet moved adjacent to the permanent magnet and/or the metal block of the pool cleaning robot 100, the wall climbing function of the pool cleaning robot 100 remains enabled, such that the pool cleaning robot 100 stays on the pool wall and keeps in docking with the base station 200. The permanent magnet does not move until the pool cleaning robot 100 has been docked with the base station 200. In this way, it is avoidable that the permanent magnet has an adverse effect on the docking process of the pool cleaning robot 100 and the base station 200. The metal block is a magnetic metal block. In some embodiments, the permanent magnet moves adjacent to the permanent magnet and/or the metal block of the pool cleaning robot 100, which means that the permanent magnet moves to a position below the permanent magnet and/or the metal block of the pool cleaning robot 100.

In this embodiment, using a movable permanent magnet as the locking mechanism 221 can more conveniently fix the pool cleaning robot 100 to the pool wall.

In some embodiments, the locking mechanism 221 includes an electromagnet. The pool cleaning robot 100 includes a permanent magnet and/or a metal block. When the pool cleaning robot 100 has been docked with the base station 200, the electromagnet is positioned adjacent to the permanent magnet and/or the metal block. The base station 200 is configured to energize the electromagnet when the pool cleaning robot 100 has been docked with the base station 200, such that the electromagnet applies a magnetic force to the permanent magnet and/or the metal block to fix the pool cleaning robot 100.

The base station 200 can control whether to energize the electromagnet. The electromagnet is magnetized when the electromagnet is energized; and the electromagnet is not magnetized when the electromagnet is not energized. When the electromagnet is energized, the pool cleaning robot 100 can still stay on the pool wall and keep in docking with the base station 200 even though the wall climbing function of the pool cleaning robot 100 is disenabled. Of course, when the electromagnet is not energized, the wall climbing function of the pool cleaning robot 100 remains enabled, such that the pool cleaning robot 100 stays on the pool wall and keeps in docking with the base station 200. The electromagnet is not energized until the pool cleaning robot 100 has been docked with the base station 200. In this way, it is avoidable that the electromagnet has an adverse effect on the docking process of the pool cleaning robot 100 and the base station 200.

In this embodiment, using the electromagnet as the locking mechanism 221 can more conveniently fix the pool cleaning robot 100 to the pool wall.

In some embodiments, the locking mechanism 221 includes a hook, and the pool cleaning robot 100 includes a protrusion or a groove fitted to the hook. The base station 200 is configured to move the hook of the locking mechanism 221 to the protrusion or the groove to fix the pool cleaning robot 100, when the pool cleaning robot 100 has been docked with the base station 200.

When the hook moves to the protrusion or the groove, the pool cleaning robot 100 can stay on the pool wall and keep in docking with the base station 200. In some embodiments, a plurality of the hooks are provided, and the number of the protrusions or grooves is equal to that of the hooks, to improve the stability of fixing the pool cleaning robot 100.

In this embodiment, using the hook as the locking mechanism 221 can more conveniently fix the pool cleaning robot 100 to the pool wall.

It should be noted that in addition to the permanent magnet, the electromagnet and the hook separately, the locking mechanism 221 may also include a combination of the permanent magnet and the hook and a combination of the electromagnet and the hook, to improve the stability of fixing the pool cleaning robot 100.

In some embodiments, the base station 200 includes a docking detection unit, and the pool cleaning robot 100 further includes a docking unit. The docking detection unit is configured to determine whether the pool cleaning robot 100 has been docked with the base station 200, based on a relative positional relationship between the docking detection unit and the docking unit.

The docking detection unit is positioned in the underwater portion 220 of the base station 200, and the docking unit is positioned in front of the pool cleaning robot 100 in a forward direction (a wall climbing direction).

Taking an example where the docking detection unit is positioned in a docking slot and the docking unit is positioned on a top of a docking protrusion that fits to the docking slot, the docking detection unit is configured to determine, in case of detecting that the docking unit comes into contact with the docking detection unit, that the pool cleaning robot 100 has been docked with the base station 200. The docking detection unit is further configured to determine, in case of detecting that the docking unit does not come into contact with the docking detection unit, that the pool cleaning robot 100 has not yet been docked with the base station 200. The docking protrusion can be inserted into the docking slot, and the docking slot can just accommodate the docking protrusion. When the docking detection unit comes into contact with the docking unit, it indicates that the docking protrusion has been inserted into the docking slot, which means that the pool cleaning robot 100 has been docked with the base station 200.

Taking an example where the docking detection unit is a Hall element and the docking unit is a permanent magnet, the docking detection unit is configured to determine, in case of detecting that the docking detection unit is completely overlapped with the docking unit, that the pool cleaning robot 100 has been docked with the base station 200. The docking detection unit is further configured to determine, in case of detecting that the docking detection unit is not completely overlapped with the docking unit, that the pool cleaning robot 100 has not yet been docked with the base station 200. A magnetic field exists around the permanent magnet. The Hall element is an electromagnetic induction sensor. The magnetic field can alter the current flowing through the Hall element. It can be determined whether the docking detection unit is completely overlapped with the docking unit based on the change of the current.

It should be noted that the above description is made by taking an example where the base station 200 includes the docking detection unit and the pool cleaning robot 100 includes the docking unit. In other possible embodiments, the base station 200 includes the docking unit and the pool cleaning robot 100 includes the docking detection unit. This manner of aligning the docking detection unit with the docking unit belongs to the same inventive concept as the above description, and thus reference is made to the above description for an implementation process thereof, which will not be described in detail here.

In addition, the above description is made by taking an example where the base station 200 is provided with the locking mechanism. However, when the pool cleaning robot 100 is provided with the locking mechanism, the pool cleaning robot 100 can be fixed to the base station 200 via the locking mechanism. The docking method belongs to the same inventive concept as the above description, and thus will not be described in detail here. Of course, in other possible implementations, both the pool cleaning robot 100 and the base station 200 may be provided with the locking mechanism. Double fixation can be achieved in this case, to maintain the stability of docking the pool cleaning robot 100 with the base station 200.

Next, the description of the underwater portion 220 of the base station 200 will be continued.

In some embodiments, the underwater portion 220 further includes a wireless charging transmitter coil, and the pool cleaning robot 100 further includes a wireless charging receiver coil. When the pool cleaning robot 100 has been docked with the base station 200, the wireless charging transmitter coil is positioned below the wireless charging receiver coil. The base station 200 is further configured to charge, when the locking mechanism 221 fixes the pool cleaning robot 100, the pool cleaning robot 100 via the wireless charging transmitter coil and the wireless charging receiver coil.

The wireless charging transmitter coil and the wireless charging receiver coil can inductively interact with each other. The wireless charging transmitter coil generates a varying magnetic field through a varying current, and the wireless charging receiver coil induces a varying current in response to the varying magnetic field, thereby achieving wireless charging of the pool cleaning robot 100. Charging efficiency is the highest when the wireless charging transmitter coil and the wireless charging receiver coil are completely aligned with each other (that is, the wireless charging transmitter coil is positioned directly below the wireless charging receiver coil). Accordingly, the pool cleaning robot 100 satisfies the return condition, which means that the remaining power of the pool cleaning robot 100 is less than or equal to a power threshold. When the pool cleaning robot 100 is successfully docked with the base station 200, the pool cleaning robot 100 can be charged by means of wireless charging. The power threshold is set by technical personnel according to actual conditions, which is not limited in the embodiments of the present application.

In some embodiments, the base station 200 includes a docking station for the pool cleaning robot 100, and the wireless charging transmitter coil is positioned on a central axis of the docking station.

In some embodiments, the underwater portion 220 further includes a garbage collection unit, and the pool cleaning robot 100 further includes a filtering unit, wherein the garbage collection unit extracts garbage from the filtering unit.

In some embodiments, the base station 200 further includes a pump system, and the garbage collection unit is docked with an opening of the filtering unit. The base station 200 is further configured to control the pump system to pump the garbage from the opening into the garbage collection unit.

In some embodiments, the locking mechanism 221 may be unlocked by the pool cleaning robot 100 and/or the base station 200, such that the pool cleaning robot can be detached from the base station.

In some embodiments, the pool cleaning robot 100 is further configured to send a detachment request to the base station 200 upon completion of the charging, wherein the detachment request is used for requesting detachment from the base station 200. The base station 200 is further configured to control, in response to the detachment request, the locking mechanism 221 to release the fixation of the pool cleaning robot 100, such that the pool cleaning robot 100 is detached from the base station 200.

The system further includes a water pump. When the pool cleaning robot 100 moves on the pool wall or the bottom of the pool, the water pump of the pool cleaning robot 100 is activated to pump a liquid from the pool into the filtering unit of the pool cleaning robot 100 through a water inlet on the bottom of the pool cleaning robot 100. The filtering unit then filters the liquid, retaining dirt in the liquid within the filtering unit. The filtered liquid is discharged through a water outlet of the pool cleaning robot 100. In this way, cleaning of the pool wall or the bottom of the pool is achieved. Of course, in addition to the water pump, the cleaning unit may also include a roller brush to clean the pool wall or the bottom of the pool.

When the locking mechanism 221 includes a permanent magnet, the pool cleaning robot 100 is further configured to send, in response to completion of the charging, a detachment request to the underwater communication unit 222 of the base station 200. The base station 200 is further configured to receive the detachment request, and in response to the detachment request, control the permanent magnet of the locking mechanism 221 to leave from the vicinity of the permanent magnet and/or the metal block of the pool cleaning robot 100 to release the fixation of the pool cleaning robot 100, such that the pool cleaning robot 100 is detached from the base station 200. It should be noted that when the permanent magnet of the locking mechanism 221 leaves from the vicinity of the permanent magnet and/or the metal block of the pool cleaning robot 100, the suction function of the pool cleaning robot 100 is activated to ensure the stability of the pool cleaning robot 100. When the permanent magnet of the locking mechanism 221 leaves from the vicinity of the permanent magnet and/or metal block of the pool cleaning robot 100, the wall climbing function of the pool cleaning robot 100 is activated to detach the pool cleaning robot 100 from the base station 200.

When the locking mechanism 221 includes an electromagnet, the pool cleaning robot 100 is further configured to send, in response to completion of the charging, a detachment request to the underwater communication unit 222 of the base station 200. The base station 200 is further configured to receive the detachment request, and in response to the detachment request, stop energizing the electromagnet of the locking mechanism 221 to release the fixation of the pool cleaning robot 100, such that the pool cleaning robot 100 is detached from the base station 200.

When the locking mechanism 221 includes a hook, the pool cleaning robot 100 is further configured to send, in response to completion of the charging, a detachment request to the underwater communication unit 222 of the base station 200. The base station 200 is further configured to receive the detachment request, and in response to the detachment request, control the hook of the locking mechanism 221 to leave from the protrusion or the groove of the pool cleaning robot 100 to release the fixation of the pool cleaning robot 100, such that the pool cleaning robot 100 is detached from the base station 200. It should be noted that when the hook of the locking mechanism 221 leaves from the protrusion or the groove of the pool cleaning robot 100, the suction function of the pool cleaning robot 100 is activated to ensure the stability of the pool cleaning robot 100. When the hook of the locking mechanism 221 leaves from the protrusion or the groove of the pool cleaning robot 100, the wall climbing function of the pool cleaning robot 100 is activated to detach the pool cleaning robot 100 from the base station 200.

In some embodiments, in addition to sending the detachment request to the underwater communication unit 222 of the base station 200 upon completion of the charging, the pool cleaning robot 100 can also send the detachment request to the underwater communication unit 222 of the base station 200 upon detecting a retrieval operation of the pool cleaning robot 100. That is, the pool cleaning robot 100 is further configured to send the detachment request to the underwater communication unit 222 of the base station 200 upon detecting an upward external force that is greater than or equal to an external force threshold. The external force threshold is set by the technical personnel based on actual circumstances, which is not limited in the embodiments of the present application.

Additionally, in addition to controlling the locking mechanism 221 to release the fixation of the pool cleaning robot 100 upon receiving the detachment request sent by the pool cleaning robot 100, the base station 200 can also control the locking mechanism 221 to release the fixation of the pool cleaning robot 100 upon receiving a detachment request sent by the target terminal.

Next, the description of the above-water portion 210 of the base station 200 will be continued.

In some embodiments, the base station 200 further includes a solar power generation panel 212 configured to supply power to the base station 200 and/or the wireless charging transmitter coil.

In some embodiments, the above-water portion 210 further includes the solar power generation panel 212 and a battery 213, wherein the solar power generation panel 212 is electrically connected to the battery 213, and the battery 213 is configured to supply power to the base station 200 and the wireless charging transmitter coil.

In this embodiment, solar energy can be utilized to supply power to the base station 200 and the wireless charging transmitter coil to save energy.

In some embodiments, the above-water portion 210 further includes a power supply unit, wherein the power supply unit is electrically connected to the battery 213, and the power supply unit is configured to convert alternating current (AC) into direct current (DC) to charge the battery 213. The power supply unit is connected to a power cord, which is used to input the AC to the power supply unit.

In this embodiment, when the solar energy cannot meet power demands of the base station 200, the power supply unit may be used to supply power to the base station 200, thereby ensuring the normal operation of the base station 200.

Through the technical solutions provided in the embodiments of the present application, when the return condition is satisfied, the pool cleaning robot moves toward the base station. Once upon reaching the vicinity of the base station, the pool cleaning robot climbs up the wall to dock with the base station. When the pool cleaning robot has been docked with the base station, the locking mechanism fixes the pool cleaning robot. Because the position of the base station is relatively fixed, there is no need to search extensively when retrieving the pool cleaning robot, thus improving the efficiency in retrieving the pool cleaning robot.

### Embodiment 2

In addition, there are some pool cleaning systems that can control the pool cleaning robot to automatically return to the base station. In some pool cleaning systems, a wire is provided between the pool cleaning robot and the base station, to enable the pool cleaning robot to move toward the base station. This wire is easy to wear and adversely affects movement of the pool cleaning robot. In some other pool cleaning systems, the pool cleaning robot moves toward the base station under the guidance of a signal. However, when the pool cleaning robot is used in an irregularly-shaped pool, which is not in a regular shape such as a circle, a rectangle, or a regular polygon, side walls of the irregularly-shaped pool may block transmission of the signal, causing problems such as refraction or reflection of the signal. As a result, the pool cleaning robot is likely unable to receive the signal and thus unable to move to the base station.

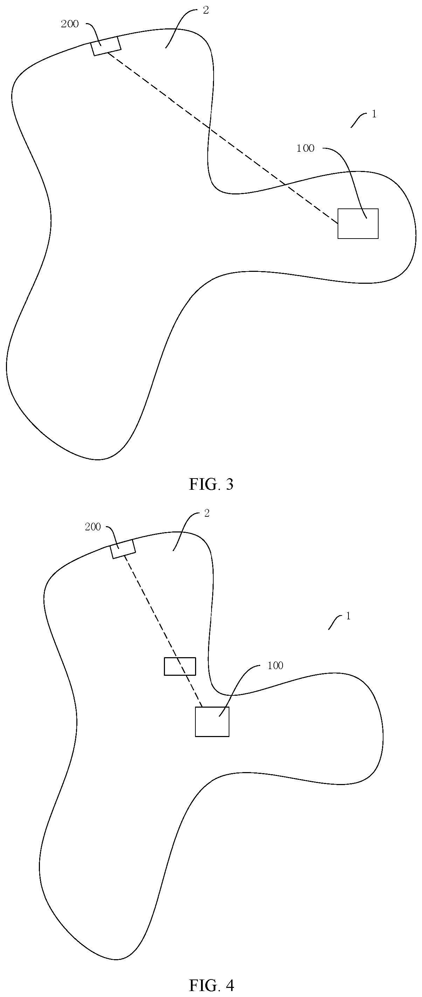

To address the above-mentioned problems, the embodiments of the present application also provide another pool cleaning system. As shown in FIGS. 3 to 8, the pool cleaning system 1 according to the embodiment of the present application is described below in conjunction with the accompanying drawings.

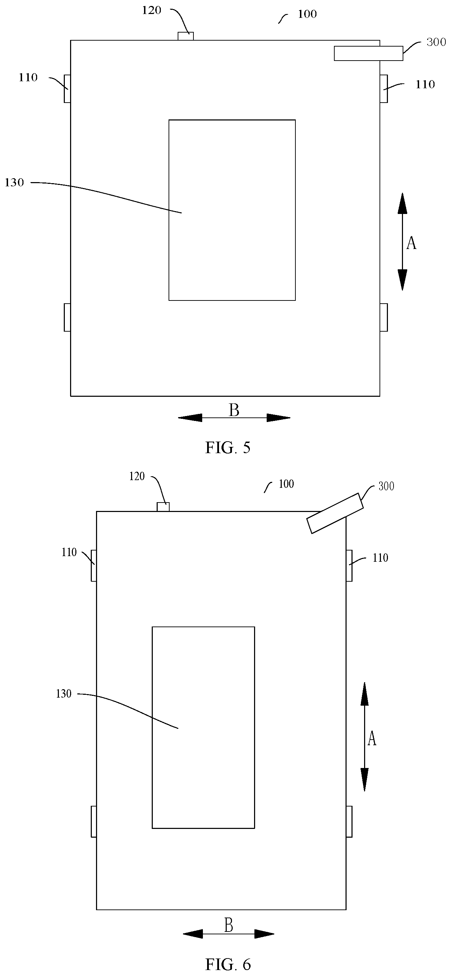

As shown in FIGS. 5 to 7, the pool cleaning system 1 according to the embodiments of the present application includes a base station 200, a pool cleaning robot 100, and a lateral detection unit 300.

The base station 200 may be mounted on a bank, a bottom wall, or a pool wall of a pool 2. The pool cleaning robot 100 and the base station 200 are switchable between a disconnected state and a connected state. When the pool cleaning robot 100 and the base station 200 are in the disconnected state, the pool cleaning robot 100 is capable of automatically moving toward the base station 200. The pool cleaning robot 100 may be provided with a front detection unit 120 which is configured to detect a distance between the pool cleaning robot 100 and an object in front of the pool cleaning robot 100. Therefore, the front detection unit 120 can detect the distance between the pool cleaning robot 100 and the base station 200. The lateral detection unit 300 is provided on the pool cleaning robot 100 and is configured to detect a distance between the pool cleaning robot 100 and an obstacle positioned at a side of the pool cleaning robot 100.

The pool cleaning robot 100 is provided with a walking unit 110, wherein the walking unit 110 may be a roller or a crawler. The walking unit 110 may rotate relative to the pool cleaning robot 100, and the walking unit 110 may come into frictional contact with the bottom wall of the pool 2 to drive the pool cleaning robot 100 to move in a horizontal direction, or the walking unit 110 may come into frictional contact with the side wall of the pool 2 to drive the pool cleaning robot 100 to move in a vertical direction.

In some embodiments, the pool cleaning robot 100 may be provided with a filtering unit 130. When the pool cleaning robot 100 and the base station 200 are in the disconnected state, the pool cleaning robot 100 can move in the pool 2, and garbage in the pool 2 is cleaned by the filtering unit 130, to achieve cleaning of the pool 2.

The base station 200 may be provided with a base station energy storage unit 230 and a first charging unit 240, wherein the base station energy storage unit 230 is connected to the first charging unit 240, and the base station energy storage unit 230 may be a photovoltaic cell. The base station energy storage unit 230 can convert solar energy into electrical energy, and the base station energy storage unit 230 has a longer battery life. In some embodiments, the base station energy storage unit 230 is a battery 213. The pool cleaning robot 100 is provided with a robot energy storage unit 140 and a second charging unit 150. The robot energy storage unit 140 is connected to the second charging unit 150, and the robot energy storage unit 140 may be a battery. The robot energy storage unit 140 may be connected to the detection unit 300 to supply power to the detection unit 300. The first charging unit 240 is cooperative with the second charging unit 150.

In some embodiments, one of the first charging unit 240 and the second charging unit 150 is a plug and the other one is a socket. The first charging unit 240 can be connected to the second charging unit 150 by insertion. Alternatively, wireless charging, such as electromagnetic charging, may be provided between the first charging unit 240 and the second charging unit 150.

When the pool cleaning robot 100 and the base station 200 are in the connected state, the first charging unit 240 is connected to the second charging unit 150. The base station energy storage unit 230 of the base station 200 charges the robot energy storage unit 140 of the pool cleaning robot 100. This eliminates the need for a user to charge the pool cleaning robot 100 or replace the battery for the pool cleaning robot 100, extends the battery life of the pool cleaning robot 100. Thus, the pool cleaning system 1 has higher degree of automation and better user experience.

The base station 200 may also be provided with an electrical connection unit and the first charging unit 240, wherein the electrical connection unit is connected to the first charging unit 240 and is adapted to connect to an external power supply. The pool cleaning robot 100 is provided with the robot energy storage unit 140 and the second charging unit 150, wherein the robot energy storage unit 140 is connected to the second charging unit 150, and the robot energy storage unit 140 may be a battery. The robot energy storage unit 140 may be connected to the detection unit 300 to supply power to the detection unit 300. The first charging unit 240 is cooperative with the second charging unit 150.

In some embodiments, the electrical connection unit may be a wire or a wire with an adapter. One of the first charging unit 240 and the second charging unit 150 is a plug and the other one is a socket. The first charging unit 240 can be connected to the second charging unit 150 by insertion. Alternatively, wireless charging, such as electromagnetic charging, may be provided between the first charging unit 240 and the second charging unit 150.

When the pool cleaning robot 100 and the base station 200 are in the connected state, the first charging unit 240 is connected to the second charging unit 150. The external power supply may charge the robot energy storage unit 140 of the pool cleaning robot 100. This eliminates the need for the user to charge the pool cleaning robot 100 or replace the battery for the pool cleaning robot 100, extends the battery life of the pool cleaning robot 100. Thus, the pool cleaning system 1 has higher degree of automation and better user experience.

In some embodiments, when the pool cleaning robot 100 and the base station 200 are in the disconnected state, the user may send a station-returning signal to the pool cleaning robot 100 via a means, such as a remote controller, an electronic terminal (such as a mobile phone, a tablet, or a computer) or the base station 200, such that the pool cleaning robot 100 moves toward the base station 200, to achieve the connection between the pool cleaning robot 100 and the base station 200.

Alternatively, when the remaining power of the robot energy storage unit 140 of the pool cleaning robot 100 is lower than a preset power, the pool cleaning robot 100 may automatically move toward the base station 200 to connect the base station 200, such that the base station 200 may charge the pool cleaning robot 100. The preset power may be 5%, 6%, 7%, 8%, 9%, 10%, 11%, 12%, 13%, 14%, 15%, 16%, 17%, 18%, 19% or 20% of the maximum power.

As shown in FIGS. 5 to 7, the pool cleaning robot 100 has a first direction (a direction indicated by Arrow A in the figure) and a second direction (a direction indicated by Arrow B in the figure). The first direction, the second direction, and a height direction of the pool cleaning robot 100 are perpendicular to each other. The pool cleaning robot 100 moves along the first direction, and the lateral detection unit 300 is configured to detect the distance between the pool cleaning robot 100 and an obstacle positioned in the second direction of the pool cleaning robot 100. Because the pool cleaning robot 100 moves in the pool 2, in normal cases, the obstacle in the second direction of the pool cleaning robot 100 is the side wall of the pool 2. During the process when the pool cleaning robot 100 moves toward the base station 200, the lateral detection unit 300 can detect, in real time, the distance between the pool cleaning robot 100 and the side wall of the pool 2, such that the pool cleaning robot 100 can move along the side wall of the pool 2, thereby ensuring that the pool cleaning robot 100 can move to the base station 200 and connect the base station 200.

It should be noted that the pool cleaning robot 100 may compare the distance currently fed back by the lateral detection unit 300 with a distance previously fed back by the lateral detection unit 300. When the distance currently fed back by the lateral detection unit 300 is greater than the distance previously fed back by the lateral detection unit 300, it indicates that the pool cleaning robot 100 is approaching the obstacle. When the distance currently fed back by the lateral detection unit 300 is smaller than the distance previously fed back by the lateral detection unit 300, it indicates that the pool cleaning robot 100 is moving away from the obstacle. In this way, by continuously comparing each detection result, the distance between the pool cleaning robot 100 and the obstacle can be effectively controlled, such that the pool cleaning robot 100 moves along the obstacle.

The lateral detection unit 300 detects the distance between the side wall of the pool and the pool cleaning robot 100, and the pool cleaning robot 100 moves along the side wall of the pool 2. Therefore, regardless of whether the pool 2 is an irregular-shaped pool, that is, regardless of whether the side wall of the pool 2 is a flat plane or a curved plane, or has a corner, it does not adversely affect the movement of the pool cleaning robot 100 toward the base station 200, thereby improving the reliability of the pool cleaning robot 100 returning to the base station 200. That is, the pool cleaning robot 100 has a higher probability of returning to the base station 200, and thus the pool cleaning robot 100 can be suitable for the irregular-shaped pool 2.

Some pools 2 may be provided with three-dimensional structures such as columnar structures or platform-shaped structures. When the pool cleaning robot 100 is positioned near the above-mentioned three-dimensional structure, the lateral detection unit 300 may detect the three-dimensional structure, and the pool cleaning robot 100 may be caused to rotate in a circumferential direction of the three-dimensional structure. As a result, the pool cleaning robot 100 cannot return to the base station 200.

With reference to data from the lateral detection unit 300, the pool cleaning robot 100 can avoid the side wall of the pool 2 or the obstacle in the pool 2 that adversely affects the movement of the pool cleaning robot 100, such that the probability of collision of the pool cleaning robot 100 is lower.

The pool cleaning robot 100 is provided with a timing unit 170. In a case where the pool cleaning robot 100 is moving toward the base station 200, when the cumulative time of the timing unit 170 exceeds a preset time, a forward surface of the pool cleaning robot 100 rotates in a direction away from the obstacle to change the forward direction of the pool cleaning robot 100.

When the cumulative time of the timing unit 170 exceeds the preset time, it means that the pool cleaning robot 100 may be rotating around the three-dimensional structure at this moment. In this case, the pool cleaning robot 100 is controlled to rotate to allow the lateral detection unit 300 to detect objects in other regions. As a result, the probability of the lateral detection unit 300 in detecting the side wall of the pool 2 is increased, and the pool cleaning robot 100 moves along an obstacle newly detected by the lateral detection unit 300, which is beneficial for the pool cleaning robot 100 to return to the base station 200.

An angle at which the forward surface of the pool cleaning robot 100 rotates in the direction away from the obstacle may be not smaller than 90° and not greater than 270°, for example, 90°, 95°, 100°, 105°, 110°, 115°, 120°, 125°, 130°, 135°, 140°, 145°, 150°, 155°, 160°, 165°, 170°, 175°, 180°, 185°, 190°, 195°, 200°, 205°, 215°, 220°, 225°, 230°, 235°, 240°, 245°, 250°, 255°, 260°, 265° or 270°, to avoid detecting the same obstacle after the rotation of the pool cleaning robot 100.

Furthermore, the preset time may be no less than 30 seconds, such as 30 seconds, 35 seconds, 40 seconds, 45 seconds, 50 seconds, 55 seconds, 60 seconds, 65 seconds, 70 seconds, 75 seconds, 80 seconds, 85 seconds, 90 seconds, 95 seconds, 100 seconds, 105 seconds, 110 seconds, 115 seconds, 120 seconds, 125 seconds, 130 seconds, 135 seconds, 140 seconds, 145 seconds, 150 seconds, 155 seconds, 160 seconds, 165 seconds, 170 seconds, 175 seconds, 180 seconds, 185 seconds, 190 seconds, 195 seconds, 200 seconds, 210 seconds, 220 seconds, 230 seconds, or 240 seconds.

As shown in FIGS. 5 to 7, the lateral detection unit 300 is arranged on at least one of side surfaces, a top surface, a bottom surface, and a forward surface of the pool cleaning robot 100. The side surface is positioned in the second direction of the pool cleaning robot 100. When the pool cleaning robot 100 is in a horizontal state, the top surface is positioned on a side facing away from the bottom wall of the pool 2 in the height direction of the pool cleaning robot 100, the bottom surface is positioned on a side facing the bottom wall of the pool 2 in the height direction of the pool cleaning robot 100, and the forward surface is positioned on a side in the first direction of the pool cleaning robot 100.

This allows for a more flexible layout between the lateral detection unit 300 and the pool cleaning robot 100. Different layouts may be selected according to user needs and usage scenarios, making the pool cleaning system 1 more applicable.

As shown in FIGS. 5 to 7, an angle between the extension direction of the lateral detection unit 300 and the forward direction of the pool cleaning robot 100 is greater than 0° and is not greater than 90°. The forward direction of the pool cleaning robot 100 refers to the first direction described above, and the extension direction of the lateral detection unit 300 refers to a detection direction of the lateral detection unit 300. Because the angle between the extension direction of the lateral detection unit 300 and the forward direction of the pool cleaning robot 100 is greater than 0° and is not greater than 90°, the detection direction of the lateral detection unit 300 extends along the second direction, or the detection direction of the lateral detection unit 300 faces forward and is positioned between the first direction and the second direction. The angle between the extension direction of the lateral detection unit 300 and the forward direction of the pool cleaning robot 100 may be 5°, 10°, 15°, 20°, 25°, 30°, 35°, 40°, 55°, 60°, 65°, 70°, 75°, 80°, 85°, and 90°, etc.

The side walls of some pools 2 may be uneven, that is, the side walls of the pool 2 may partially protrude inward. By arranging the extension direction of the lateral detection unit 300 to be inclined with respect to the forward direction of the pool cleaning robot 100, the lateral detection unit 300 can detect the distance between the pool cleaning robot 100 and the side wall of the pool 2 in front of the pool cleaning robot 100. In this way, it is avoidable collision between the pool cleaning robot 100 and the side wall of the pool 2, thereby improving safety of the movement of the pool cleaning robot 2.

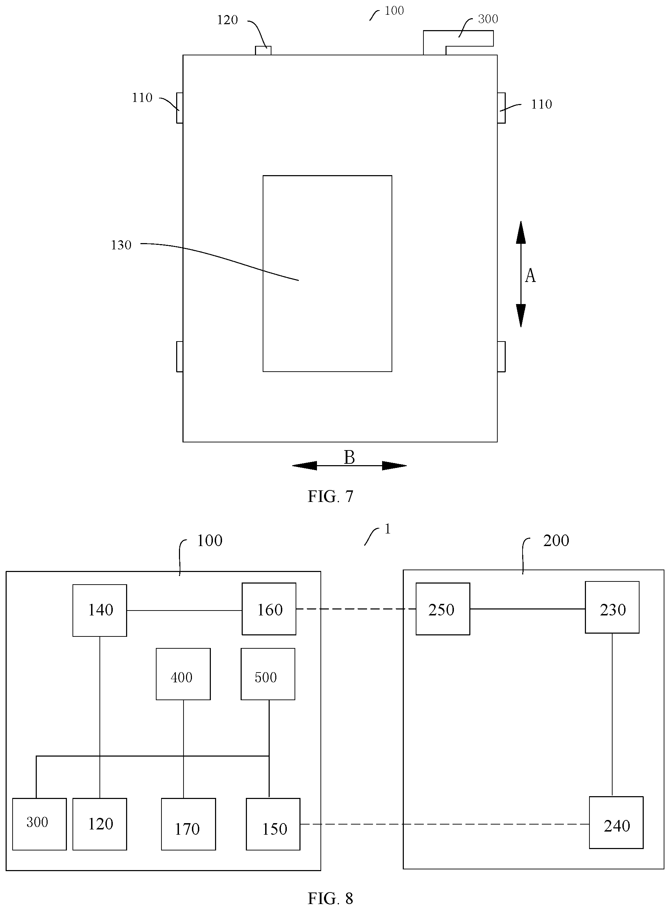

As shown in FIG. 8, the base station 200 is provided with a first signal unit 250, and the pool cleaning robot 100 is provided with a second signal unit 160. The first signal unit 250 and the second signal unit 160 are configured to wirelessly communicate with each other.. For example, the wireless communication may be performed between the first signal unit 250 and the second signal unit 160 via acoustic signals, optical signals, electromagnetic signals, or radio signals.

In some embodiments, the second signal unit 160 includes at least two ultrasonic receiving subunits, at least two wireless receiving units, or an image acquisition unit.

Thus, the base station 200 may communicate with the pool cleaning robot 100 via the first signal unit 250 and the second signal unit 160 to assist in guiding the pool cleaning robot 100, such that the movement direction of the pool cleaning robot 100 is more accurate, and the pool cleaning robot 100 has higher station-returning efficiency and reliability. Furthermore, no wires are required to connect the base station 200 to the pool cleaning robot 100, resulting in fewer restrictions and greater flexibility for the pool cleaning robot 100 during movement, while also eliminating the risk of wear of the wires.

In some embodiments, the first signal unit 250 of the base station 200 is an underwater communication unit in another embodiment.

The lateral detection unit 300 includes at least one of a distance sensor, a camera, a mechanical switch, and a pressure sensor. The distance sensor may be an optical distance sensor or an ultrasonic distance sensor.

When the lateral detection unit 300 includes the distance sensor or the camera, the lateral detection unit 300 may detect a specific distance between the pool cleaning robot 100 and the side wall of the pool 2, or the lateral detection unit 300 may sense objects within a certain range at a side of the pool cleaning robot 100, such that the pool cleaning robot 100 can move along the side wall of the pool 2.

When the lateral detection unit 300 is the mechanical switch, the lateral detection unit 300 may abut against the side wall of the pool 2, that is, the side wall of the pool 2 presses the mechanical switch, such that the pool cleaning robot 100 can move along the side wall of the pool 2 to keep the mechanical switch in a pressed state.

When the lateral detection unit 300 is the pressure sensor, the lateral detection unit 300 may come into contact with the side wall of the pool 2. When the pressure sensor detects a pressure value greater than a preset pressure value, the pool cleaning robot 100 can move along the side wall of the pool 2 to maintain the pressure value to be greater than the preset pressure value.

When the lateral detection unit 300 is the pressure sensor, the forward surface of the pool cleaning robot 100 may be closer to the side wall of the pool 2 than a backward surface, and the pool cleaning robot 100 may be tilted relative to the side wall of the pool 2 to ensure that the mechanical switch is pressed or to maintain the pressure value detected by the pressure sensor.

In some embodiments, as shown in FIG. 8, the pool cleaning robot 100 further includes a mileage detection unit 400 and a posture detection unit 500. The mileage detection unit 400 may be an odometer, and the posture detection unit 500 may be a posture sensor or a gyroscope. The mileage detection unit 400 is configured to record a movement distance of the pool cleaning robot 100, and the posture detection unit 500 is configured to detect a posture of the pool cleaning robot 100. The pool cleaning robot 100 calculates a shape of the pool 2 and a position of the base station 200 in the pool 2 according to signals from the mileage detection unit 400, signals from the posture detection unit 500, and signals from the lateral detection unit 300.

That is, the mileage detection unit 400 may detect a mileage of the pool cleaning robot 100, and the posture detection unit 500 may detect a real-time posture of the pool cleaning robot 100, for example, whether the pool cleaning robot 100 is in a horizontal state or a vertical state. The height of the base station 200 may be higher than that of the pool cleaning robot 100, and the base station 200 is arranged on the pool wall or the bank of the pool 2. Therefore, in the process when the pool cleaning robot 100 moves to the base station 200, the pool cleaning robot 100 needs to perform a wall climbing action, that is, the pool cleaning robot 100 moves along the side wall of the pool 2. During the wall climbing process of the pool cleaning robot 100, the pool cleaning robot 100 is in the vertical state.

Through the mileage detection unit 400 and the posture detection unit 500, the pool cleaning robot 100 is able to construct a contour of the pool 2 and recognize the position of the base station 200 in the pool 2. In combination with the lateral detection unit 300 on the pool cleaning robot 100, the cleaning efficiency of the pool cleaning robot 100 in cleaning the pool 2 is improved, making the cleaning more thorough, the station-returning process smoother, and the station-returning efficiency higher.

In addition, the base station 200 may be provided with a first display panel. The signals from the mileage detection unit 400 and the posture detection unit 500 may be fed back to the base station 200. The base station 200 controls the first display panel to display a contour pattern of the pool 2 and the position of the base station 200 in the pool 2, making it easier for the user to timely access to the above information.

The pool cleaning system 1 further includes an electronic terminal which may be a mobile phone, a tablet, or a computer, etc. The signals from the mileage detection unit 400 and the posture detection unit 500 may be fed back to the electronic terminal. The electronic terminal is provided with a second display panel. The electronic terminal controls the second display panel to display the contour pattern of the pool 2 and the position of the base station 200 in the pool 2, making it easier for the user to timely access to the above information. In some embodiments, the electronic terminal is an above-water device.

A station-returning method of the pool cleaning robot 100 is described with reference to the accompanying figures by using examples.

When the pool cleaning robot 100 receives a station-returning signal or a signal indicating that the remaining power of the robot energy storage unit of the pool cleaning robot 100 is below the preset power, the pool cleaning robot 100 enters a station-returning mode.

The pool cleaning robot 100 determines whether a valid guiding signal has been received. When the guiding signal has been received, the pool cleaning robot 100 moves in a propagation direction of the guiding signal. Otherwise, the pool cleaning robot 100 obtains the detection result from the lateral detection unit 300 and moves along the obstacle.

The valid guiding signal is sent by the base station 200. When the pool cleaning robot 100 is used in the irregularly-shaped pool 2, that is, the shape of the irregularly-shaped pool 2 is not a regular shape such as a circular, a rectangular, or a regular polygon, the side wall of the irregularly-shaped pool 2 may block the transmission of the guiding signal (as shown in FIG. 3), or in the pool 2 there may be an object (as shown in FIG. 4) that hinders the transmission of the guiding signal. As a result, the valid guiding signal may be subjected to refraction or reflection in the pool 2, causing the pool cleaning robot 100 to fail to receive the valid guiding signal. A refracted or reflected signal is an invalid signal, and a signal sent by an object other than the pool cleaning system 1 is also an invalid signal. The invalid signal cannot guide the pool cleaning robot 100 to move to the base station 200.

In some embodiments, the pool cleaning robot 100 may determine whether the received signal is a valid signal based on signal intensity. When the guiding signal is an optical signal, the pool cleaning robot 100 may determine whether the received signal is a valid signal based on an illumination range. When the guiding signal is an acoustic signal, the pool cleaning robot 100 may determine whether the received signal is a valid signal based on parameters such as sound intensity and the slope of a rising edge.

After the pool cleaning robot 100 moves along the obstacle, when the cumulative time of the timing unit 170 exceeds the preset time, the forward surface of the pool cleaning robot 100 rotates in the direction away from the obstacle, such that the pool cleaning robot 100 moves along the side wall of the pool 2 until the pool cleaning robot 100 begins to move in the propagation direction of the valid guiding signal when the pool cleaning robot 100 receives the valid guiding signal.

The pool cleaning system is provided with a lateral detection unit, such that the pool cleaning robot can move along the side wall of the pool, thereby increasing the probability of returning to the base station, and thus the pool cleaning robot can be suitable for the irregular-shaped pool.

### Embodiment 3

When the pool cleaning robot needs maintenance, it floats to the water surface of the pool. However, when the pool cleaning robot is far away from the bank, it is required to manually use long poles or other tools to pull the pool cleaning robot to the pool wall of the pool and then retrieve and recycle it to the bank for maintenance. The maintenance steps are cumbersome, time-consuming and labor-intensive, leading to poor user experience.

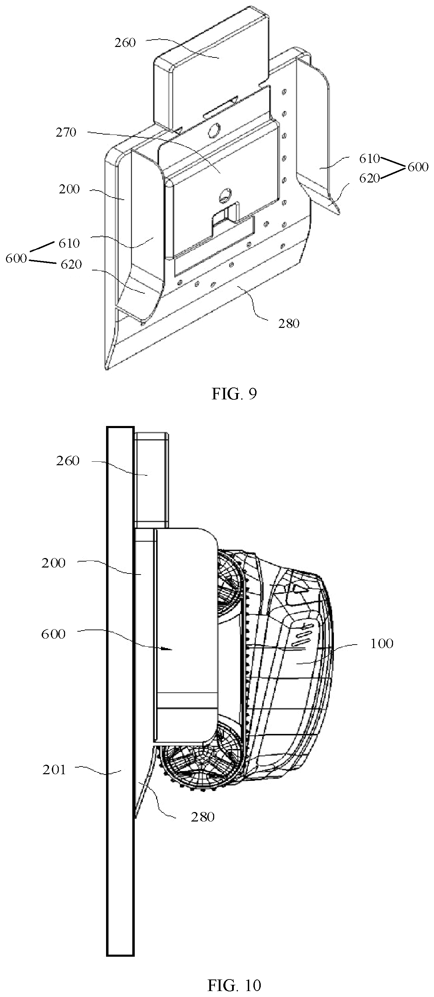

Referring to FIGS. 9 and 10, the pool cleaning system proposed in the present application includes the base station 200, a control unit 260, and a locking apparatus 270.

The base station 200 is configured to carry the pool cleaning robot, thereby providing an adhesion basis to fix the pool cleaning robot. The base station 200 is arranged vertically and its bottom surface is fixedly connected to the pool wall 201 of the pool. The base station 200 may adopt a variety of shapes. For example, the base station 200 may be a rectangular structure as shown in FIG. 1, and of course the base station 200 may also be designed as a cylindrical structure or the like according to the shape of a chassis of the pool cleaning robot 100. It is to be understood that to ensure that the base station 200 fully supports the pool cleaning robot 100, the surface area of the base station 200 is greater than the area of the chassis of the pool cleaning robot 100. The base station 200 may be fixedly connected to the pool wall 201 of the pool directly through fasteners such as bolts, or may be indirectly connected to the pool wall 201 of the pool by means of a fixing unit. To prevent causing damage to the pool wall 201 of the pool when the base station 200 is connected to the pool wall 201 of the pool by means of the fasteners such as the bolts, the fixing unit may utilize a connector such as a thin plate or sheet, wherein a surface of the connector is coated with glue, such that the base station 200 is connected to the pool wall 201 of the pool through an adhesion force of the glue. In addition, the fixing unit may also utilize a suction cup, such that the base station 200 is connected to the pool wall 201 of the pool through a suction force of the suction cup. It is to be understood that one base station 200 may be connected by means of a plurality of fixing units. The plurality of fixing units each may utilize the connector coated with glue on the surface thereof, such as the thin plate or sheet, or may utilize the suction cup. To improve connection reliability, some of the plurality of fixing units may utilize the connector coated with glue on the surface thereof, such as the thin plate or sheet, and the remaining fixing units may utilize the suction cup.

The control unit 260 is configured to communicate with the pool cleaning robot 100 to guide the pool cleaning robot 100 to return to the base station 200. The control unit 260 includes a box body, and a power supply, a control unit and a wireless communication unit positioned in the box body. The control unit is electrically connected to the wireless communication unit and the power supply. The power supply is configured to supply power to the control unit and the wireless communication unit, thereby ensuring proper operation of the control unit and the wireless communication unit. The power supply may utilize a large-capacity rechargeable battery or external mains power. The wireless communication unit communicates with the pool cleaning robot 100, transmits a control signal of the control unit, and transmits a signal received from the pool cleaning robot 100 to the control unit, such that the control unit controls the pool cleaning robot 100 in real time. The control unit 260 is positioned above the base station 200 and is connected to the base station 200. The control unit 260 may be arranged in various forms. For example, in some embodiments, the control unit 260 may be fixedly connected to the pool wall 201 of the pool. In this case, the control unit 260 is in an elongated structure, and the bottom of the control unit 260 is positioned above the waterline of the pool. Similar to the base station 200 fixedly connected to the pool wall 201 of the pool, the control unit 260 may also be fixedly connected to the pool wall 201 of the pool directly through the fasteners such as the bolts, or may be indirectly connected to the pool wall 201 of the pool by means of the fixing unit. To prevent causing damage to the pool wall 201 of the pool when the base station 260 is connected to the pool wall 201 of the pool by means of the fasteners such as the bolts, the fixing unit may utilize a connector such as a thin plate or sheet, wherein the surface of the connector is coated with glue, such that the base station 260 is connected to the pool wall 201 of the pool through an adhesion force of the glue. In addition, the fixing unit may also utilize a suction cup, such that the base station 260 is connected to the pool wall 201 of the pool through a suction force of the suction cup. It is to be understood that one control unit 260 may be connected by means of a plurality of fixing units. The plurality of fixing units each may utilize the connector coated with glue on the surface thereof, such as the thin plate or sheet, or may utilize the suction cup. To improve the connection reliability, some of the plurality of fixing units may utilize the connector coated with glue on the surface thereof, such as the thin plate or sheet, and the remaining fixing units may utilize the suction cup.

In some embodiments, the control unit 260 may also be fixedly arranged on the bank of the pool, and the control unit 260 is connected to the base station 200 via a cable. When the base station 200 is provided with an electric device, the cable not only may serve as the connector, but also may serve as a wire to transmit power and signals to the electric device. Specification parameters such as the length, the diameter, and the size of the cable may be flexibly designed according to actual needs.

The locking apparatus 270 is arranged at the base station 200 and is configured to fix the pool cleaning robot 100 when the pool cleaning robot 100 returns to the base station 200. For example, the locking apparatus 270 may include a positioning unit and a locking actuator. The positioning unit is electrically connected to the power supply and the control unit, and is configured to detect whether the pool cleaning robot 100 has returned to the base station 200. The positioning unit may be a position switch, an infrared positioning sensor, a laser positioning sensor, or the like. After the pool cleaning robot 100 has returned to the base station 200, a positioning signal may be generated and transmitted to the control unit.

The locking actuator is electrically connected to the power supply and the control unit, and is configured to fix the pool cleaning robot 100 when the positioning unit detects that the pool cleaning robot 100 has returned to the base station 200. The locking actuator may utilize an electromagnetic actuator or a mechanical actuator, or may simultaneously utilize the electromagnetic actuator and the mechanical actuator to improve the reliability of fixing the pool cleaning robot 100.

The electromagnetic actuator and the mechanical actuator may have various specific structures. In some embodiments, the electromagnetic actuator includes an electromagnet. When the positioning unit detects that the pool cleaning robot 100 has returned to the base station 200, the positioning signal is generated and transmitted to the control unit. After receiving the positioning signal, the control unit controls the electromagnet to be energized, such that the electromagnet attracts a metal piece on the bottom of the pool cleaning robot 100, to fix the pool cleaning robot 100 to the base station 200. The metal piece on the bottom of the pool cleaning robot 100 may be a metal block specially arranged on the bottom of the pool cleaning robot 100, or a metal structural member on the bottom of the pool cleaning robot 100. In some embodiments, the mechanical actuator may include a power source, a transmission mechanism, and a clamping claw. The power source is in transmission connection with the clamping claw via the transmission mechanism. When the positioning unit detects that the pool cleaning robot 100 has returned to the base station 200, the positioning signal is generated and transmitted to the control unit. After receiving the positioning signal, the control unit controls to activate the power source, such that the power source drives, via the transmission mechanism, the clamping claw to clamp the pool cleaning robot 100, thereby fixing the pool cleaning robot 100 to the base station 200. The power source may be a drive motor. The transmission mechanism may utilize a gear transmission mechanism, a belt transmission mechanism, a chain transmission mechanism, a multi-link transmission mechanism, or the like.

In the solution of the present application, the base station 200 is arranged on the pool wall 201 of the pool to carry the pool cleaning robot 100. When the pool cleaning robot 100 requires maintenance, the control unit 260 positioned above the base station 200 may be utilized to automatically guide the pool cleaning robot 100 to return to the base station 200, and the pool cleaning robot 100 may be fixed to the base station 200 by means of the locking apparatus 270. This eliminates the need to manually use the long poles or other tools to pull the pool cleaning robot 100, which is positioned far away from the bank, to the pool wall 201 of the pool, thus effectively streamlining the maintenance steps. As can be seen, this solution can address the problem that the pool cleaning robot 100 is cumbersome, time-consuming and labor-intensive in the maintenance steps, and poor in user experience.

To further simplify the maintenance steps for the pool cleaning robot 100 and improve the user experience, in some embodiments, a return station for the pool cleaning robot 100 may also include a wireless charging transmitter coil. The wireless charging transmitter coil is arranged at the base station 200 and is electrically connected to the power supply and the control unit. When the pool cleaning robot 100 returns to the base station 200, a battery inside the pool cleaning robot 100 is charged via the charging receiver coil of the pool cleaning robot 100. When the positioning unit detects that the pool cleaning robot 100 has returned to the base station 200, the positioning signal is generated and transmitted to the control unit. After receiving the positioning signal, the control unit energizes the wireless charging transmitter coil, such that inductive charging may be achieved via the wireless charging transmitter coil and the charging receiver coil of the pool cleaning robot 100. In the case of low battery, the pool cleaning robot 100 returns to the base station 200 to replenish its power, without having to retrieve the pool cleaning robot 100 to the bank for charging. Therefore, the user experience can be further improved.

To ensure that the pool cleaning robot 100 can successfully return to the base station 200, referring to FIGS. 9 and 10, in some embodiments, the pool cleaning robot 100 further includes a guide apparatus 600. The guide apparatus 600 includes two guide positioning plates 610, wherein the two guide positioning plates 610 are arranged in parallel and spaced apart on a side of a support plane away from the pool wall 201 of the pool. The guide apparatus 600 is configured to guide the pool cleaning robot 100 to return to the base station 200. The distance between the two guide positioning plates 610 may be slightly greater than the width of the pool cleaning robot 100. An orientation of the two guide positioning plates 610 may be an up-down direction as shown in FIG. 9. In this case, the pool cleaning robot 100 moves from bottom to top and returns to the base station 200. Of course, the orientation of the two guide positioning plates 610 may also be a left-right direction. In this case, the pool cleaning robot 100 may move from left to right or from right to left and return to the base station 200.

In addition, as shown in FIG. 9, the two guide positioning plates 610 each have an extension portion 620 at one end on the same side, wherein a distance between the two extension portions 620 gradually increases along a direction away from the other ends of the guide positioning plates 610. The base station 200 has an arc-shaped transition portion 280 at one end proximal to the extension portion 620. The distance between the two extension portions 620 is gradually reduced in an inverted V-shaped manner to guide the pool cleaning robot 100, such that in combination with the arc-shaped transition portion 280, the pool cleaning robot 100 is gradually lifted to be flush with the base station 200, to reduce resistance to movement of the pool cleaning robot 100. In this way, the pool cleaning robot 100 may be guided to successfully return to the base station 200 from the pool wall 201 of the pool.

All the foregoing optional technical solutions may be randomly combined to form optional embodiments of the present application, and details are not described again herein.

The above are only optional embodiments of the present application and are not intended to limit the present application. Any modifications, equivalent substitutions, improvements, and the like made within the spirit and principle of the present application should be included within the scope of protection of the present application.

## Claims

1. A pool cleaning system, comprising a pool cleaning robot and a base station; wherein the pool cleaning robot is capable of moving toward the base station and then docking with the base station.

2. The system according to claim 1, wherein the pool cleaning robot and/or the base station is provided with a locking mechanism, the pool cleaning robot comprises at least one motor, a power supply module, and a filtering unit, and the base station is positioned on a pool wall at a position corresponding to a waterline of a pool;
the pool cleaning robot is configured to move toward the base station when a return condition is satisfied;
the pool cleaning robot is further configured to climb up the wall upon reaching a vicinity of the base station, and then move on the pool wall to dock with the base station; and
the base station is configured to control the locking mechanism to fix the pool cleaning robot when the pool cleaning robot has been docked with the base station.

3. The system according to claim 2, wherein the base station comprises an above-water communication unit configured to communicate with an above-water device; and
the base station further comprises at least one underwater communication unit configured to guide the pool cleaning robot to move toward the base station and communicate with an underwater device, and the underwater communication unit is electrically connected to the above-water communication unit.

4. The system according to claim 3, wherein the underwater device is the pool cleaning robot, and the underwater communication unit is configured to transmit an ultrasonic signal; the pool cleaning robot is configured to receive, when the return condition is satisfied, the ultrasonic signal transmitted by the base station via at least two ultrasonic receiving subunits of the pool cleaning robot, wherein the at least two ultrasonic receiving subunits are positioned at different positions of the pool cleaning robot; and based on a signal parameter of the ultrasonic signal received by each of the at least two ultrasonic receiving subunits, the pool cleaning robot is controlled to move toward the base station until the pool cleaning robot has been docked with the base station.

5. The system according to claim 3, wherein the underwater device is the pool cleaning robot, the underwater communication unit is configured to transmit a wireless signal, the pool cleaning robot is configured to receive, when the return condition is satisfied, the wireless signal transmitted by the base station via at least two wireless receiving subunits of the pool cleaning robot, wherein the at least two wireless receiving subunits are positioned at different positions of the pool cleaning robot; and based on a signal parameter of the wireless signal received by each of the at least two wireless receiving subunits, the pool cleaning robot is controlled to move toward the base station until the pool cleaning robot has been docked with the base station.

6. The system according to claim 3, wherein the underwater device is the pool cleaning robot, the underwater communication unit is configured to emit light of a preset wavelength, the pool cleaning robot is configured to acquire, when the return condition is satisfied, an environment image of the pool cleaning robot via an image acquisition unit of the pool cleaning robot; and based on pixels for the preset wavelength in the environment image, the pool cleaning robot is controlled to move toward the base station.

7. The system according to claim 4, wherein the base station comprises a docking station for the pool cleaning robot, and the at least one underwater communication unit is arranged on a central axis of the docking station and/or symmetrically on both left and right sides of the central axis of the docking station.

8. The system according to claim 3, wherein the above-water communication unit is configured to send, in response to a control instruction sent by a target terminal, the control instruction to the underwater communication unit, such that the underwater communication unit forwards the control instruction to the pool cleaning robot, the target terminal being a terminal having control authority over the pool cleaning robot; and
the underwater communication unit is further configured to send, in response to feedback information sent by the pool cleaning robot, the feedback information to the above-water communication unit, such that the above-water communication unit forwards the feedback information to the target terminal.

9. The system according to claim 2, wherein the base station further comprises a wireless charging transmitter coil, and the pool cleaning robot further comprises a wireless charging receiver coil; when the pool cleaning robot has been docked with the base station, the wireless charging transmitter coil is positioned adjacent to the wireless charging receiver coil; and the base station is further configured to charge, when the locking mechanism fixes the pool cleaning robot, the pool cleaning robot via the wireless charging transmitter coil and the wireless charging receiver coil.

10. The system according to claim 9, wherein the base station comprises a docking station for the pool cleaning robot, and the wireless charging transmitter coil is positioned on a central axis of the docking station.

11. The system according to claim 9, wherein the base station further comprises a solar power generation panel configured to supply power to the base station and/or the wireless charging transmitter coil.

12. The system according to claim 11, wherein the base station further comprises a battery, the solar power generation panel is electrically connected to the battery, and the battery is configured to supply power to the base station and the wireless charging transmitter coil.

13. The system according to claim 2, wherein the locking mechanism is unlockable by the pool cleaning robot and/or the base station, such that the pool cleaning robot is detachable from the base station.

14. The system according to claim 2, wherein the base station further comprises a garbage collection unit configured to extract garbage from the filtering unit.

15. The system according to claim 14, wherein the base station further comprises a pump system, the garbage collection unit is docked with an opening of the filtering unit, and the base station is further configured to control the pump system to pump the garbage from the opening into the garbage collection unit.

16. The system according to claim 2, wherein the locking mechanism and the pool cleaning robot each comprise a permanent magnet and/or a metal block, such that when the pool cleaning robot has been docked with the base station, the permanent magnet and/or the metal block of the locking mechanism establishes a magnetic connection with the permanent magnet and/or the metal block of the pool cleaning robot to fix the pool cleaning robot; or
the locking mechanism comprises an electromagnet, and the pool cleaning robot comprises a permanent magnet and/or a metal block; when the pool cleaning robot has been docked with the base station, the electromagnet is positioned adjacent to the permanent magnet and/or the metal block; and the base station is configured to energize the electromagnet when the pool cleaning robot has been docked with the base station, such that the electromagnet applies a magnetic force to the permanent magnet and/or the metal block to fix the pool cleaning robot; or
the locking mechanism comprises a hook, and the pool cleaning robot comprises a protrusion or a groove fitted to the hook; and the base station is configured to connect the hook of the locking mechanism to the protrusion or the groove to fix the pool cleaning robot when the pool cleaning robot has been docked with the base station.

17. The system according to claim 2, wherein the return condition comprises: whether remaining power of the pool cleaning robot is less than or equal to a power threshold, whether the filtering unit of the pool cleaning robot is filled with garbage, whether the pool cleaning robot has completed a predetermined cleaning task, and whether the pool cleaning robot has received a return instruction.

18. The system according to claim 2, wherein the base station and/or the pool cleaning robot further comprises a docking detection unit, the base station and/or the pool cleaning robot further comprises a docking unit, wherein the docking detection unit is configured to determine whether the pool cleaning robot has been docked with the base station, based on a relative positional relationship between the docking detection unit and the docking unit.

19. The system according to claim 1, wherein the pool cleaning robot is provided with a walking unit, the walking unit is rotatable relative to the pool cleaning robot and is configured to come into contact with a bottom wall and a side wall of a pool, the pool cleaning robot and the base station are switchable between a disconnected state and a connected state, and when the pool cleaning robot and the base station are in the disconnected state, the pool cleaning robot is capable of automatically moving toward the base station; and
wherein a lateral detection unit is provided on the pool cleaning robot, and is configured to detect a distance between the pool cleaning robot and an obstacle positioned at a side of the pool cleaning robot.

20. The system according to claim 19, wherein the base station is provided with a first signal unit, the pool cleaning robot is provided with a second signal unit, and the first signal unit and the second signal unit are configured to wirelessly communicate with each other.

21. The system according to claim 19, wherein the base station is provided with a base station energy storage unit and a first charging unit, the base station energy storage unit is connected to the first charging unit, the pool cleaning robot is provided with a robot energy storage unit and a second charging unit, the robot energy storage unit is connected to the second charging unit, and the first charging unit is cooperative with the second charging unit.

22. The system according to claim 19, wherein the base station is provided with an electrical connection unit and a first charging unit, the electrical connection unit being connected to the first charging unit and being adapted to connect to an external power supply;
and the pool cleaning robot is provided with a robot energy storage unit and a second charging unit, the robot energy storage unit being connected to the second charging unit, the first charging unit being cooperative with the second charging unit.

23. The system according to claim 19, wherein an angle between an extension direction of the lateral detection unit and a forward direction of the pool cleaning robot is greater than 0° and is not greater than 90°.

24. The system according to claim 19, wherein the lateral detection unit comprises at least one of an optical distance sensor, a camera, an ultrasonic distance sensor, a mechanical switch, and a pressure sensor.

25. The system according to claim 19, wherein the lateral detection unit is arranged on at least one of side surfaces, a top surface, a bottom surface, and a forward surface of the pool cleaning robot.

26. The system according to claim 19, wherein the pool cleaning robot is provided with a timing unit, in a case where the pool cleaning robot is moving toward the base station, when a cumulative time of the timing unit exceeds a preset time, a forward surface of the pool cleaning robot rotates in a direction away from the obstacle, to change a forward direction of the pool cleaning robot.

27. The system according to claim 19, wherein the pool cleaning robot is provided with a mileage detection unit and a posture detection unit, the mileage detection unit is configured to record a movement distance of the pool cleaning robot, and the posture detection unit is configured to detect a posture of the pool cleaning robot.

28. The system according to claim 27, wherein the base station is provided with a first display panel, and the first display panel is configured to display a contour pattern of the pool and a position of the base station in the pool, according to the mileage detection unit and the posture detection unit; and/or
the pool cleaning system further comprises an electronic terminal having a second display panel, and the second display panel is configured to display the contour pattern of the pool and the position of the base station in the pool, according to the mileage detection unit and the posture detection unit.

29. The system according to claim 1, wherein the base station is vertically arranged with its bottom surface in contact with a pool wall of a pool, and the system further comprises:
a control unit positioned on an upper part of the base station and at least partially exposed above a water surface of the pool; wherein the control unit comprises a box body, and a power supply, a control unit and a wireless communication unit positioned in the box body; the control unit is electrically connected to the wireless communication unit and the power supply, and the control unit is configured to communicate with the pool cleaning robot via the wireless communication unit to guide the pool cleaning robot to return to the base station; and
a locking mechanism arranged on the base station, the locking mechanism being configured to fix the pool cleaning robot when the pool cleaning robot returns to the base station.

30. The system according to claim 29, further comprising a fixing unit fixedly connected to the base station and/or the control unit, wherein the fixing unit is configured to mount the base station and/or the control unit on the pool wall of the pool.

31. The system according to claim 29, wherein the control unit is fixedly arranged on a bank of the pool and is connected to the base station via a cable.

32. The system according to claim 30, wherein the fixing unit utilizes a connector coated with glue on a surface thereof; and/or
the fixing unit utilizes a suction cup.

33. The system according to any one of claims 29 to 32, wherein the locking mechanism comprises:
a positioning unit electrically connected to the power supply and the control unit, the positioning unit being configured to detect whether the pool cleaning robot has returned to the base station; and
a locking actuator electrically connected to the power supply and the control unit, the locking actuator being configured to fix the pool cleaning robot when the positioning unit detects that the pool cleaning robot has returned to the base station.

34. The system according to claim 33, wherein the positioning unit utilizes a position switch, an infrared positioning sensor, or a laser positioning sensor.

35. The system according to claim 33, wherein the locking actuator comprises:
an electromagnetic actuator comprising an electromagnet, wherein when the positioning unit detects that the pool cleaning robot has returned to the base station, the electromagnet is energized to attract a metal piece on a bottom of the pool cleaning robot; and/or
a mechanical actuator comprising a power source, a transmission mechanism, and a clamping claw; wherein the power source is in transmission connection with the clamping claw via the transmission mechanism; when the positioning unit detects that the pool cleaning robot has returned to the base station, the power source is activated to drive the clamping claw to clamp the pool cleaning robot.

36. The system according to any one of claims 29 to 32, further comprising:
a wireless charging transmitter coil arranged at the base station and electrically connected to the power supply and the control unit, wherein the wireless charging transmitter coil is configured to charge an internal battery of the pool cleaning robot via a charging receiver coil of the pool cleaning robot when the pool cleaning robot returns to the base station.

37. The system according to any one of claims 29 to 32, further comprising:
a guide apparatus comprising two guide positioning plates, wherein the two guide positioning plates are arranged in parallel and spaced apart on a side of a support plane away from the pool wall of the pool, and the guide apparatus is configured to guide the pool cleaning robot to return to the base station.

38. The system according to claim 37, wherein the two guide positioning plates each have an extension portion at one end on a same side; and a distance between the two extension portions gradually increases along a direction away from other ends of the guide positioning plates; and
the base station has an arc-shaped transition portion at one end proximal to the extension portion to guide the pool cleaning robot to smoothly return to the base station from the pool wall of the pool.
